# EUROPEAN PATENT APPLICATION

(11) **EP 4 807 693 A1**
(43) Date of publication of application: **16.09.2026**
(21) Application number: 25305338.3
(22) Date of filing: 13.03.2025
(51) Int. Cl.: G06V 20/52

(54) **ANOMALY DETECTION METHOD AND SYSTEM**

(71) Applicant: BULL SAS, 78340 Les Clayes-Sous-Bois (FR)
(72) Inventor: NAEINI, Fariborz, LONDON, KT3 3FR (GB); BOGHOSSIAN, Boghos, LONDON, SW14 8BZ (GB); NAGY, Levente, LONDON, SE16 4NU (GB); RAZA, Syed, DUBAI (AE)
(74) Representative: IPAZ

(57) **Abstract**

The invention relates to a method (100) for anomaly analysis comprising at least the steps of :
a) receiving (102) at least a snapshot from a network of cameras,
b) processing (104) said at least snapshot using a vision language model to generate text description of said at lease snapshot,
c) if the text description relates to an anomaly, embedding said text description into a numerical vector using a text-embedding model,
d) storing the vector into a database,
e) comparing (108) the vector to previously stored vectors of the database,
f) if the anomaly is new, raising an alarm for a user feedback.

## Description

### Field of the invention

The present invention relates to an anomaly detection method. The invention also relates to a system for anomaly detection.

The field of the invention is the field of systems and methods for reducing false alarms in anomaly detection using images captured from surveillance cameras.

### Background

In large-scale closed-circuit television (CCTV) networks , automated anomaly detection often generates an overwhelming volume of alarms, many of which are redundant or false. A key challenge is to distinguish novel and actionable alarms from repetitive or unimportant alarms in a large-scale CCTV network.

Conventional anomaly detection algorithms rely on motion tracking, background estimation, and object detection in videos such as disclosed in documents US6028626A or US12039781. In addition, many algorithms are designed for a specific behaviour or type of anomalies which introduces an anomaly detection system for crowd by considering historical information of crowd counts to establish anomaly patterns. The main problem with these approaches is the high false alarm rates and lack of generalization to adapt to new scenarios.

Advancements in machine learning techniques and data-driven algorithms enable more generalized solutions for anomaly detections in surveillance camera streams. For example, in document US8724904B2 each image captured from the camera is divided into multiple regions and then an unsupervised method is considered to determine minorities as anomalies. In document US9111148B2, authors perform clustering on feature map and then determine distances from each cluster to identify anomalies in video frames. On the other hand, some approaches consider the identification of anomalies in frames based on existing features in the normal and abnormal images. Then the system improves anomaly detection by calculating the distance between the source and target features map as described in document US20230281959A1. Another example in document CN118093850A, a person is detected and tracked where temporal features are extracted to be compared against a machine learning model to identify an anomaly of a person movements. Another approach is described in document EP4428832A1 which considers the posture of a pedestrian as a feature to perform iterative clustering to find abnormal behaviours of pedestrians. Although machine learning methods to extract features are considered in the above mentioned document, the systems mainly rely on anomaly behaviours of a person based on different local features. These approaches lack the generalization when other factors outside the object region is present to detect an anomaly. For example, the type and the orientation of objects around a pedestrian can indicate an unusual activity (e.g. luggage not standing on ground or a hazardous object close to a pedestrian or even the presence of the police interacting with a person). Furthermore, object detection and tracking are limited to certain categories which eliminates further knowledge to determine whether there is an anomaly in the scene or not.

A purpose of the present invention is to overcome at least one of these drawbacks.

Another purpose of the present invention is to provide a method for anomaly detection with reduced redundant alerts.

Another purpose of the present invention is to optimize the overall efficiency and effectiveness of anomaly detection methods.

### Summary of the invention

One or more embodiments of the invention make it possible to achieve at least one of these aims by a method for anomaly analysis comprising at least the steps of :
a) receiving at least a snapshot from a network of cameras,
b) processing said at least snapshot using a vision language model to generate text description of said at lease snapshot,
c) if the text description relates to an anomaly, embedding said text description into a numerical vector using a text-embedding model,
d) storing the vector into a database,
e) comparing the vector to previously stored vectors of the database,
f) if the anomaly is new, raising an alarm for a user feedback.

The method allows detecting anomalies in an efficient manner. Indeed, the output from the vision language model (VLM) ensures that visual anomalies are converted into interpretable and actionable text descriptions, thus enabling to process only unusual activities. Besides, the embedding captures the semantic meaning of each description to ensure similar context are captured even if they are phrased differently.

In the present document, step e) may comprise:
- computing a similarity score between the vector and each previously stored vector in the database,
- comparing the similarity score to a similarity threshold to determine whether the detected anomaly in step c) is similar to an existing one in the database.

In particular, in step f), the user may classify the new anomaly as interesting in case of requiring an action or uninteresting in case of false alarms or irrelevant events. The method may further comprise classifying the associated vector to the anomaly as uninteresting in the database, if the anomaly is classified as uninteresting by the user.

According to some embodiments, the method may comprise a step of adjusting the similarity threshold depending on the user feedback.

The method may comprise a step of suppressing an alarm based on the similarity score and the relevant information. For example, alarms may be suppressed if the similarity score exceeds the similarity threshold. Besides, additional filters (e.g., camera, location, time of day) to refine suppression decisions can be applied. This helps reducing redundant alerts, preventing operational teams from being overwhelmed by repeated notifications about the same type of anomaly.

In particular, the embedded vectors of uninteresting alarms may be added to the vector database to suppress similar alarms in the future automatically. Besides, the suppression logic may be adjusted based on patterns in user feedback, tailoring its behavior to specific operational requirements.

The at least snapshot may be extracted from live video streams of the network of cameras. Each snapshot may be associated with a relevant information, such as a camera location, a timestamp, and/or a camera identification code.

The text-embedding model may be used to convert the description into the numerical vector representation. The text-embedding model may be chosen to output a 512-dimensional vector. However, the size of the text-embedding model may vary based on the VLM and the size of the description that requires to be used. The embedding captures the semantic meaning of each description to ensure similar context are captured even if they are phrased differently. This process is fast and efficient which is suitable for large scale real-time applications.

The text-embedding model can be a dense embedding model with 512 floating point dimensions trained on English and/or other language dataset for capturing the context from sentences. Naturally, other text-embedding model could be used.

The method can comprise further steps to preprocess the text outputted from the VLM before the embedding, such as removing specific words or the first sentence to enhance the captured context in the text with the embedding model.

Preferably, the vector database may be a high-dimensional data storage, designed to handle the storage and retrieval of high-dimensional vectors efficiently.

Each vector may be stored in association with the relevant information, such as timestamp, camera ID, location.

For example, vectors related to similar anomalies are grouped using a clustering method. The similarity score may be computed between the vector and each cluster of embedded vectors.

Preferably, the vectors may be stored in the database chronologically.

In some embodiment, the vision language model may be obtained using machine learning trained on vision-text pairs on various scenes.

In particular, the step b) may comprise prompting the vision language model using a set of prompts previously determined. The set of prompts may be previously determined based on benchmarking the vision language model on various anomaly datasets in order to capture anomalies. The vision language model can be an association of different vision language models.

The VLM can be further train on anomaly detection use case by fine tuning on new data and redefining the new types of anomalies for the model on visual question-answering datasets. Moreover, the VLM can be a high resolution model. The VLM also can be inferenced on a number of consecutive frames to understand an activity over time. This will allow the VLM to identify temporal aspect of the scene per camera and determine an anomaly using a number of frames that are periodically captured from the same camera. The number of frames and period are configurable based on the anomaly use case as well as hardware demand.

In an embodiment, a step of displaying an alert when a new anomaly is detected at step f), said step comprising displaying of:
- the textual description of the anomaly,
- the stored relevant information,
- the at least snapshot, and/or
- a confidence score representing a certainty rate about the anomaly being new.

According to another aspect of the same invention, it is proposed a computer program comprising instructions which, when the program is executed by a processing unit, cause the processing unit to carry out the steps of the above method.

According to another aspect of the same invention, it is proposed computing system for anomaly analysis being configured to:
a) receive at least a snapshot from a network of cameras,
b) process said at least snapshot using a vision language model to generate text description of said at lease snapshot,
c) if the text description relates to an anomaly, embed said text description into a numerical vector using a text-embedding model,
d) store the vector into a database,
e) compare the vector to previously stored vectors of the database,
f) if the anomaly is new, raising an alarm for a user feedback.

### Description of the figures and embodiments

Other advantages and characteristics will become apparent on examination of the detailed description of an embodiment which is in no way limitative, and the attached figures, where:
- Figure 1 is a schematic representation of a computing system according to the invention; and
- Figure 2 is a flowchart of an image selection method performed by the computing system of figure 1.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the figures, elements common to several figures retain the same reference.

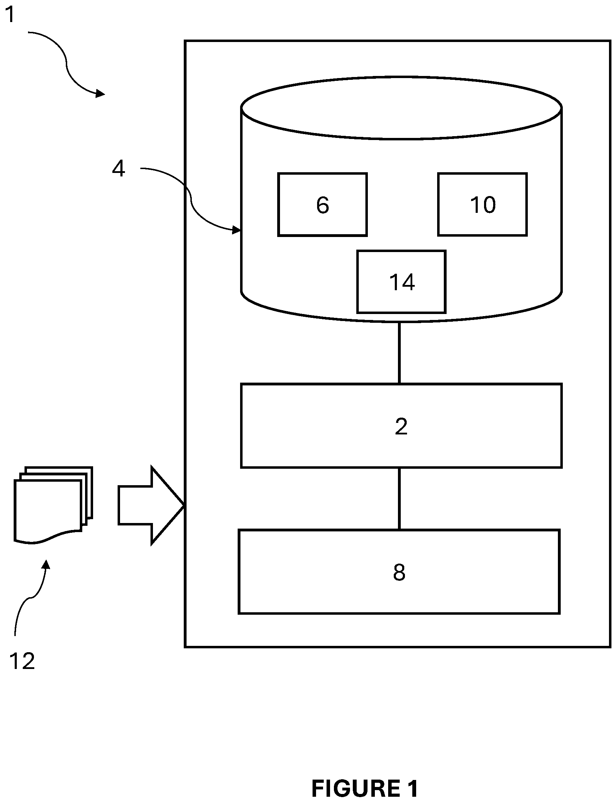

A computing system 1 according to the invention is shown on figure 1. The computing system 1 is configured to perform an anomaly analysis method 100 for detecting an anomaly based on inputs from a network of surveillance cameras, or closed-circuit television (CCTV) deployed across monitored areas.

The computing system 1 includes a processing unit 2, a memory 4 coupled to the processing unit 2 and a display unit 8.

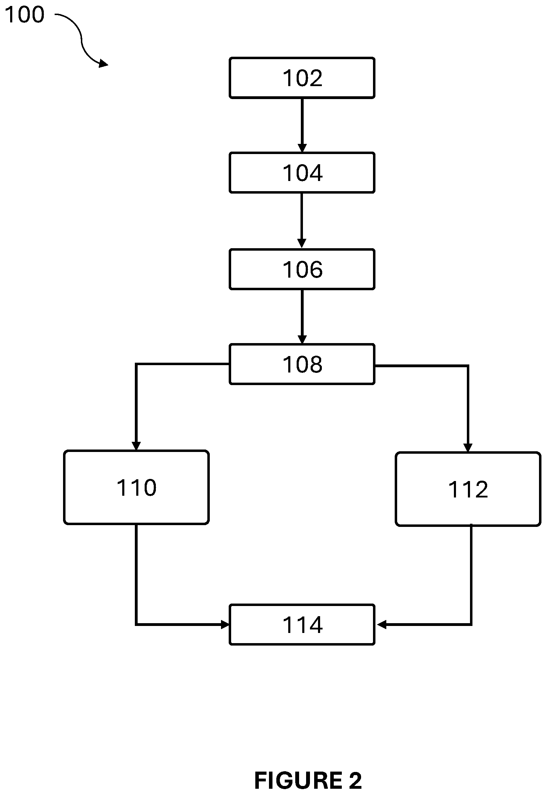

The simplified diagram of Figure 2 illustrates some steps of the method 100 according to the invention.

On step 102, an input 12 is received from the network of surveillance cameras. The video streams are used to extract :
- a series of snapshots which relates periodic still frames extracted from live video streams,
- metadata forming relevant information of the snapshots. The relevant information can be contextual information about the captured frames, such as a camera location, a timestamp, and a camera ID.

The snapshots serve as the starting point for anomaly analysis. To ensure efficiency, the processing unit 2 can process these snapshots at configurable intervals, resolution or triggering based on a condition in a set of rules.

The method 100 comprises a step 104 of processing the snapshots by a vision language model (VLM) 10 to generate text description of the snapshots. The VLM 10 is stored in the memory 4 but can be hosted remotely in a distant server communicating with the processing unit 2.

A set of prompts are previously determined based on benchmarking the vision language model on various anomaly datasets in order to capture anomalies.

An example of prompt would be 'Is there anything unusual or dangerous in the scene formed by the snapshots?. Some of the output of the VLM could be:
- Yes, there is a person climbing over a fence which is unusual activity.
- Yes, there is something unusual and potentially dangerous in this image. A car is parked on the railway tracks, which is a risky and unsafe action.
- Yes. The car is positioned between two sets of tracks, and it is unclear if there is any warning signage or barriers to prevent vehicles from entering the tracks. This situation poses a risk of accidents and disruptions to train services.
- No, there is not anything unusual in the scene.

The output from the VLM ensures that visual anomalies are converted into interpretable and actionable text descriptions, enabling downstream processing.

Generally, the VLM is trained on Vision-Text pairs to generalize on various scenes considering large datasets across various domains. The VLM 10 can be an association of different vision language models.

To improve the performance of the method, the VLM can be further train on anomaly detection use case by fine tuning on new data and redefining the new types of anomalies for the model on visual question-answering datasets. Moreover, the VLM can be a high resolution model. Such VLM is more suitable for CCTV cameras as usually the cameras are deployed in a considerable height which makes objects smaller and harder to capture enough features with a low-resolution model. Finally, the VLM also can be inferenced on a number of consecutive frames to understand an activity over time. This will allow the VLM to identify temporal aspect of the scene per camera and determine an anomaly using a number of frames that are periodically captured from the same camera. The number of frames and period are configurable based on the anomaly use case as well as hardware demand.

For the following steps, the processing unit 2 considers only the snapshots for which the VLM outputs unusual activities, and ignore the responses which doesn't have anything unusual or dangerous in the scene.

Once the VLM generates a textual description of the snapshots, the processing unit 2 checks if the description of VLM includes any anomaly. If there is no anomaly in the scene, the snapshot are ignored and the method processes the next snapshots.

In case of finding an anomaly in the scene, a step 106 is performed to embed the outputted text description from the VLM into a numerical vector. A text-embedding model 14 is used to convert the description into the numerical vector representation. The text-embedding model 14 can be stored in the memory 4 or in a remote server.

The size of the text-embedding model may vary based on the VLM and the size of the description that requires to be used. The embedding captures the semantic meaning of each description to ensure similar context are captured even if they are phrased differently. This process is fast and efficient which is suitable for large scale real-time applications.

For instance, the text " Yes, there is a person climbing over a fence which is unusual activity." might be transformed into a 512-dimensional embedding vector. A similar description, such as "unauthorized individual scaling a security fence," would yield an embedding close to the first one in the vector space as the context is similar.

The use of embeddings allows comparing anomalies based on their semantic similarity, not just exact wording.

The text-embedding model can be a dense embedding model with 512 floating point dimensions trained on English dataset for capturing the context from sentences. Naturally, other text-embedding model could be used.

The method can comprise further steps to preprocess the text outputted from the VLM such as removing specific words or the first sentence to enhance the captured context in the text with the embedding model.

The embedding model can be chosen to capture required context and maximize distance for similar descriptions with a different context. For example, the initial use of sentence embeddings is suitable for shorter descriptions rather than long description of the scene. Furthermore, the size of the embedded vector can be considered to further optimized the inference time and accuracy for given descriptions based on length and present features.

The outputted vector of the text-embedding model is then stored in a vector database 6 stored in the memory 4. Naturally, the vector database 6 can be hosted in a remote server. The vector database serves as the central repository for all anomaly embeddings generated at step 106.

Advantageously, the vector database 106 is a high-dimensional data storage, designed to handle the storage and retrieval of high-dimensional vectors efficiently.

Particularly, each embedded vector is stored in the vector database 6 alongside relevant metadata (e.g., timestamp, camera ID, location). This allows providing additional context during retrieval and enables precise querying, anomaly clustering and location or time-based filtering.

Besides, the vectors are stored in the database chronologically such as the database maintains a chronological record of all past vectors related to anomalies. This enables to build a comprehensive knowledge base over time.

This centralized storage allows retrieving and comparing embeddings with minimal latency, even in large-scale deployments.

On step 108, the vector embedded at step 106 is compared to existing embeddings in the vector database 6, as follows:
- a similarity score is calculated between the new embedded vector and each stored vector using a distance metric such as cosine similarity or Euclidean distance.
- the computed similarity score is compared to a predefined similarity threshold to determine whether the new anomaly is similar to an existing one.

For example, a new vector with a cosine similarity score of 0.92, where 1.0 indicates identical vectors, might be classified as "similar" if the similarity threshold is 0.9 while a new vector associated with a similarity score of 0.75 would be classified as "novel".

In the case, the similarity comparison indicates that the new anomaly closely matches a previously recorded event, a step 110 of suppressing the alarm is performed. Alarms are suppressed if the similarity score exceeds the similarity threshold. Besides, additional filters (e.g., camera, location, time of day) to refine suppression decisions can be applied.

The step 110 ensures that only novel anomalies are escalated. Besides, the step 110 helps reducing redundant alerts, preventing operational teams from being overwhelmed by repeated notifications about the same type of anomaly.

If the similarity comparison at step 108 indicates that an anomaly is novel, a new alarm is raised and displayed on the display 8. The alert includes:
- the textual description of the anomaly (e.g., "a vehicle parked in a fire lane"),
- contextual metadata such as location, time, and camera ID,
- a snapshot of the alarm, and/or
- a confidence score representing a certainty about the anomaly.

This ensures that critical and unique anomalies are promptly brought to the user's attention.

The user input its feedback which is integrated in step 112. Users can classify alarms as "interesting" (requiring action) or "uninteresting" (false alarms or irrelevant events). The feedback is utilized in two ways:
- the embedded vectors of uninteresting alarms are added to the vector database 6 to suppress similar alarms in the future automatically,
- the similarity threshold is adjusted and the suppression logic of step 110 is based on patterns in user feedback, tailoring its behavior to specific operational requirements.

For example, if users repeatedly classify "motion detected by tree branches" as uninteresting, the method learns to suppress similar alarms without user intervention. Thus, the method incorporates user feedback to continuously refine its performance.

Furthermore, the embedding model can be fine-tuned to differentiate for description of CCTV cameras and common use cases to further enhance the model of the similarity score.

In particular, the similarity threshold used for alarm suppression can be dynamically adjusted based on:
- user feedback trends: For example, the anomalies frequently marked as "uninteresting" will lead to higher thresholds, reducing false positives, and/or
- operational Context: The similarity threshold can be lowered in high-security environments to ensure even minor anomalies are escalated.

This dynamic adjustment balances the trade-off between minimizing false alarms and ensuring critical anomalies are not overlooked.

In an embodiment, the method 100 comprises a step of grouping embedded vectors that relate to similar anomalies using clustering techniques. This ensures scalability in large deployments as clusters enable faster similarity comparisons by narrowing the search space, thus improving retrievals. Besides, clustering helps identify recurring patterns or trends in anomalies, providing valuable insights for operational planning.

The method 100 presents at least the following advantages:
- false alarms reduction: intelligent suppression mechanisms significantly reduce redundant alerts,
- context-aware detection: vision-language integration ensures nuanced and accurate anomaly descriptions.
- scalable design: the method supports large-scale deployments with thousands of cameras and diverse surveillance scenarios.

Of course, the invention is not limited to the examples detailed above.

## Claims

1. A method (100) for anomaly analysis comprising at least the steps of :
a) receiving (102) at least a snapshot (12) from a network of cameras,
b) processing (104) said at least snapshot using a vision language model (10) to generate text description of said at lease snapshot,
c) if the text description relates to an anomaly, embedding (106) said text description into a numerical vector using a text-embedding model (14),
d) storing the vector into a database (6),
e) comparing (108) the vector to previously stored vectors of the database,
f) if the anomaly is new, raising an alarm for a user feedback.

2. The method (100) according to the preceding claim, wherein step e) comprises:
- computing a similarity score between the vector and each previously stored vector in the database,
- comparing the similarity score to a similarity threshold to determine whether the detected anomaly in step c) is similar to an existing one in the database.

3. The method (100) according to the preceding claim, comprising a step of adjusting (112) the similarity threshold depending on the user feedback.

4. The method (100) according to any of the preceding claims, wherein in step f), the user classifies the new anomaly as interesting in case of requiring an action or uninteresting in case of false alarms or irrelevant events, the method further comprises classifying the associated vector to the anomaly as uninteresting in the database, if the anomaly is classified as uninteresting by the user.

5. The method (100) according to any of the preceding claims, wherein the at least snapshot (12) is extracted from live video streams of the network of cameras, and wherein each snapshot is associated with a relevant information, such as a camera location, a timestamp, and/or a camera identification code.

6. The method (100) according to the preceding claim, wherein each vector is stored in association with the relevant information.

7. The method (100) according to any of the preceding claims, wherein the vision language model (10) is obtained using machine learning trained on vision-text pairs on various scenes.

8. The method (100) according to any of the preceding claims, wherein the text-embedding model (14) outputs a 512-dimensional vector.

9. The method (100) according to any of the preceding claims, wherein vectors related to similar anomalies are grouped using a clustering method.

10. The method (100) according to any of the preceding claims in combination with claim 6, comprising a step of displaying an alert when a new anomaly is detected at step f), said step comprising displaying of:
- the textual description of the anomaly,
- the stored relevant information,
- the at least snapshot, and/or
- a confidence score representing a certainty rate about the anomaly being new.

11. The method (100) according to any of the preceding claims in combination with claims 2 and 6, comprising a step of suppressing an alarm based on the similarity score and the relevant information.

12. The method (100) according to any of the preceding claims, wherein the vectors are stored in the database chronologically.

13. The method (100) according to any of the preceding claims, wherein step b) comprises prompting the vision language model (10) using a set of prompts previously determined.

14. A computer program comprising instructions which, when the program is executed by a processing unit, cause the processing unit to carry out the steps of the method (100) of one of preceding claims.

15. A computing system (1) for anomaly analysis being configured to:
a) receive (102) at least a snapshot (12) from a network of cameras,
b) process (104) said at least snapshot using a vision language model to generate text description of said at lease snapshot,
c) if the text description relates to an anomaly, embed (106) said text description into a numerical vector using a text-embedding model (14),
d) store the vector into a database (6),
e) compare (108) the vector to previously stored vectors of the database,
f) if the anomaly is new, raising an alarm for a user feedback.
